# EUROPEAN PATENT SPECIFICATION

(11) **EP 4 068 188 B1**
(45) Date of publication and mention of the grant of the patent: **21.02.2024**
(21) Application number: 20893797.9
(22) Date of filing: 19.11.2020
(51) Int. Cl.: G06Q 20/40, G06Q 20/02, G06F 21/64, H04L 9/32, H04L 9/08, G06Q 20/38, G06Q 20/42, H04L 9/00

(54) **ESCROW SYSTEM AND TRANSACTION METHOD**
TREUHANDSYSTEM UND TRANSAKTIONSVERFAHREN
SYSTÈME DE DÉPÔT ET PROCÉDÉ DE TRANSACTION

(30) Priority: 26.11.2019 JP 2019213351
(43) Date of publication of application: 05.10.2022
(73) Proprietor: Daikin Industries, Ltd., Osaka-shi, Osaka 530-0001 (JP)
(72) Inventor: FUJIMOTO, Shinichirou, Osaka-shi, Osaka 530-8323 (JP)
(74) Representative: Goddar, Heinz J.
(86) International application number: PCT/JP2020/043212
(87) International publication number: WO 2021/106740

(56) References cited:
- JP-A- 2019 523 494
- JP-B1- 6 224 283
- US-A1- 2019 213 586
- Bitfury Group: "Smart Contracts on Bitcoin Blockchain", , 4 September 2015 (2015-09-04), XP055382678, Retrieved from the Internet: URL:http://bitfury.com/content/5-white-pap ers-research/contracts-1.1.1.pdf [retrieved on 2017-06-19]
- Mine Aram: ""Escrow" to ensure transaction safety", , 10 April 2017 (2017-04-10), XP093001958, Retrieved from the Internet: URL:https://gaiax-blockchain.com/escrow [retrieved on 2022-11-25]
- GOLDFEDER STEVEN ET AL: "Escrow Protocols for Cryptocurrencies: How to Buy Physical Goods Using Bitcoin", 23 December 2017 (2017-12-23), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 321 - 339, XP047459171, ISBN: 978-3-540-74549-5 [retrieved on 2017-12-23] * Section 4.2; page 327 * * Section 5.1; page 329 - page 330 * * Section 5.2; page 330 * * Section 5.3; page 330 - page 331 *
- Pedro Franco: "Understanding Bitcoin: Cryptography, Engineering and Economics" In: "Understanding Bitcoin: Cryptography, Engineering and Economics", 24 November 2014 (2014-11-24), Wiley, XP055279012, ISBN: 978-1-119-01916-9 pages ToC,Ch01-Ch04, * Section 4.5; page 45 - page 46 *
- Mine Aram: ""Escrow" that guarantees the security of transactions", , 10 April 2017 (2017-04-10), XP055830645, Retrieved from the Internet: URL:https://gaiax-blockchain.com/escrow

## Description

### [Technical Field]

The present disclosure relates to an escrow system and a transaction method in the escrow system.

### [Background Art]

When disposing of an appliance to be recycled, such as a home appliance and an electrical appliance to be recycled, for example, a user may ask an electronics retailer or an authorized dealer to dispose of the appliance to be recycled, or may ask a buyer to purchase the appliance to be recycled as a second-hand product.

### [Summary of the Invention]

### [Problem to be Solved by the Invention]

In these cases, however, it may be difficult for the user to confirm whether the requested appliance is properly disposed of in accordance with the requested contents by the vendor.

The present disclosure proposes a technique to ensure a proper implementation of a transaction.

### [Means to Solve the Problem]

The present invention provides an escrow system according to claim 1.

Bitfury Group: "Smart Contracts on Bitcoin Blockchain", , 4 September 2015 (2015-09-04), XP055382678, Retrieved from the Internet: URL:http://bitfury.com/content/5-white-papers-research/contracts-1.1.1.pdf [retrieved on 2017-06-19] explores the concept of utilizing smart contracts on the Bitcoin blockchain and discusses its potential applications. Smart contracts are self-executing contracts with the terms of the agreement directly written into code. These contracts can be automatically executed and enforced without the need for intermediaries.

Mine Aram: ""Escrow" to ensure transaction safety", , 10 April 2017 (2017-04-10), XP093001958, Retrieved from the Internet: URL-:https://gaiax-blockchain.com/escrow [retrieved on 2022-11-25] discusses the use of escrow in order to ensure transaction security. Escrow acts as a middleman that holds the funds or assets in a secure manner until both parties involved in the transaction fulfill their obligations. It provides a layer of protection by mitigating the risk of fraud and providing recourse in case of disputes. The article also explores how blockchain technology can enhance the effectiveness of escrow services by providing a decentralized and transparent system for tracking and executing transactions.

GOLDFEDER STEVENETAL: "Escrow Protocols for Cryptocurrencies: How to Buy Physical Goods Using Bitcoin", 23 December 2017 (2017-12-23), SAT 2015 18TH INTERNATIONAL CONFERENCE, AUSTIN, TX, USA, SEPTEMBER24-27, 2015; [LECTURE NOTESIN COMPUTER SCIENCE; LECT.NOTES COMPUTER], SPRINGER, BERLIN, HEIDELBERG, PAGE(S) 321-339, XP047459171, ISBN: 978-3-540-74549-5 [retrieved on 2017-12-23] discusses the use of escrow protocols to facilitate secure transactions when purchasing physical goods with Bitcoin. The article presents different escrow mechanisms, including multi-signature transactions and smart contracts, and discusses their advantages and limitations.

Pedro Franco: "Understanding Bitcoin: Cryptography, Engineering and Economics" In: "Understanding Bitcoin: Cryptography, Engineering and Economics", 24 November 2014 (2014-11-24), Wiley, XP055279012, ISBN: 978-1-119-01916-9 pages ToC,Ch01-Ch04, discusses the concept of mining in the Bitcoin network. Mining is the process by which new bitcoins are created and transactions are verified. It involves solving complex mathematical puzzles using computational power.

According to an aspect of the present invention a proper implementation of the transaction can be ensured.

According to an embodiment, when the escrow node sets, with respect to a transaction relating to a product or a service between the user and the first node via a second node, a second multi-signature address between the second node and the escrow node in the blockchain network, the second node, in response to a completion notification of payment of a cost relating to the transaction by the user to the escrow node, executes the transaction with respect to the first node and transmits a signature and a fulfillment notification of the transaction to the second multi-signature address, the first node, in response to an execution of the transaction by the second node, transmits a signature and a fulfillment notification of the transaction to the second multi-signature address, and the second node, in response to the signature and the fulfillment notification of the transaction from the first node and the second node to the second multi-signature address, receives a payment notification of the cost.

According to the present embodiment, even when another node is interposed between the user and the node that executes the transaction of the user, a proper implementation of the transaction can be ensured.

According to an embodiment, the second multi-signature address is a 2-of-3 multi-signature address.

According to the present embodiment, even when another node is interposed between the user and the node that executes the transaction of the user, a proper implementation of the transaction can be ensured.

According to an embodiment, when the second node does not execute the transaction with respect to the first node within a predetermined period of time, the escrow node transmits a signature and a cancellation notification of the transaction to the second multi-signature address, and the first node transmits a signature and a cancellation notification of the transaction to the second multi-signature address, and the escrow node, in response to the signature and the cancellation notification of the transaction from the escrow node and the first node to the second multi-signature address, notifies the user of a refund of the cost.

According to the present embodiment, if the transaction is not implemented properly, the transaction can be canceled without causing any disadvantage to the user.

According to an embodiment, the transaction relates to a recycling of an appliance, and the first node stores state data of the appliance in a blockchain.

According to an embodiment, the appliance is at least one of an air conditioner, a ventilation unit, an air purifier, a total heat exchanger, a refrigerator, and a freezer, and the state data includes one or more of a model number, a manufactured year, a total operating time, a maximum load, a failure history, and a repair history of the appliance.

According to an embodiment, an application server may be further included, wherein the application server includes a recycling transaction broker section configured to provide recycling vendor information to the user and receive a transaction request with respect to a recycling vendor selected by the user based on the recycling vendor information, and a second-hand transaction broker section configured to provide second-hand appliance information to the user and receive a transaction request with respect to a second-hand appliance selected by the user based on the second-hand appliance information.

According to an embodiment, the second-hand appliance information includes at least one of a price, state data, and installation environment information of the second-hand appliance.

The present invention also provides a transaction method according to claim 9

According to the aspect of the present disclosure, a proper implementation of the transaction can be ensured.

### [Brief Description of Drawings]

FIG. 1 is a schematic diagram illustrating a blockchain system according to an embodiment of the present disclosure;
FIG. 2 is a block diagram illustrating a hardware configuration of a node according to an embodiment of the present disclosure;
FIG. 3 is a schematic diagram illustrating an escrow transaction according to an embodiment of the present disclosure;
FIG. 4 is a schematic diagram illustrating an escrow transaction according to another embodiment of the present disclosure;
FIG. 5 is a schematic diagram illustrating an escrow transaction according to another embodiment of the present disclosure;
FIG. 6 is a schematic diagram illustrating an escrow transaction according to another embodiment of the present disclosure; and
FIG. 7 is a block diagram illustrating a functional configuration of an application server according to an embodiment of the present disclosure.

### [Mode for Carrying Out the Invention]

Hereinafter, embodiments will be described.

In the following embodiment, an escrow system is disclosed that implements escrow transactions utilizing a blockchain.

### <Outline of Present Disclosure>

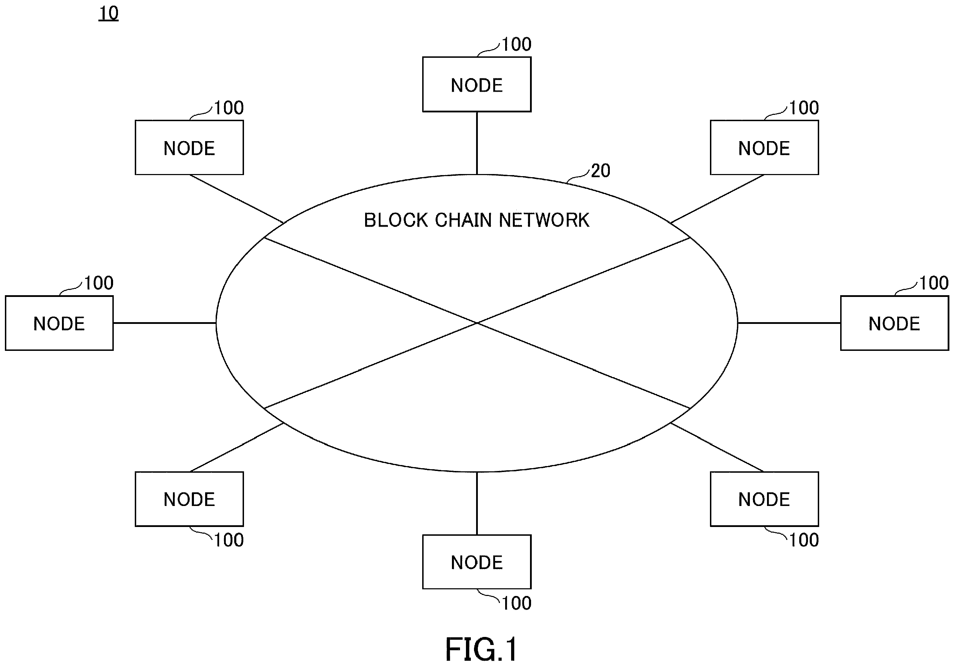

As illustrated in FIG. 1, an escrow system 10 according to an embodiment of the present disclosure includes multiple nodes 100 and a blockchain network 20, each node 100 being interconnected via the blockchain network 20. For example, the escrow system 10 may be implemented as a public, private, or another type of blockchain.

For example, if the escrow system 10 is implemented as a public blockchain, when each transaction described below is executed, a transaction indicating a transaction content is generated and the generated transaction is verified and approved by the node 100. Then, a miner motivated by any appropriate incentive (such as a virtual currency) calculates a hash value, and a block is composed of transactions that have been approved using the calculated hash value. The configured blocks are added to the blockchain and distributed to each node 100.

On the other hand, if the escrow system 10 is implemented as a private blockchain, when each transaction described below is executed, a transaction indicating the transaction content is generated, similar to the public blockchain, and the generated transaction is verified and approved by the node 100. Then, a predetermined node, such as an administrator node, or a node specified by the administrator node or the like calculates a hash value, and a block is composed of transactions that have been approved using the calculated hash value. The configured blocks are added to the blockchain and distributed to each node 100.

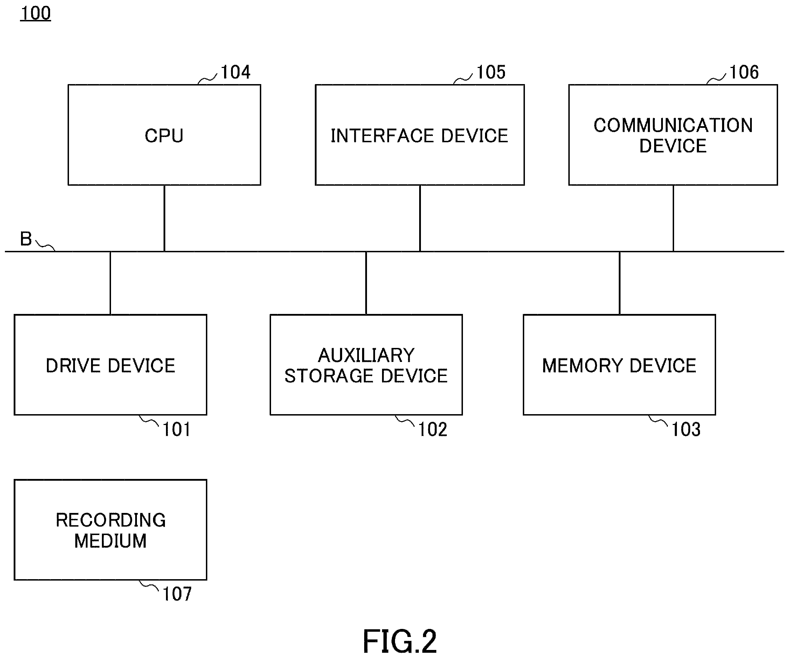

The Node 100 may be, for example, a computing device such as a server, a personal computer, or the like. An application or a tool for implementing a blockchain in the escrow system 10 may be installed at each node 100. The node 100 may have a hardware configuration as illustrated in FIG. 2. That is, the node 100 includes a drive device 101, an auxiliary storage device 102, a memory device 103, a Central Processing Unit (CPU) 104, an interface device 105, and a communication device 106 which are interconnected via the bus B.

Various computer programs including programs or instructions for implementing the various functions and processes described below in the node 100 may be provided by a recording medium 107 such as a Compact Disk-Read Only Memory (CD-ROM). When the recording medium 107 on which the program is stored is set to the drive device 101, the program is installed in the auxiliary storage device 102 from the recording medium 107 through the drive device 101. However, the program need not necessarily be installed from the recording medium 107, and may be downloaded from any external device via a network or the like. The auxiliary storage device 102 stores the installed program and stores necessary files, data, and the like. The memory device 103 reads out and stores a program or data from the auxiliary storage device 102 when an instruction to start a program is issued. The auxiliary storage device 102 and the memory device 103 are implemented as a non-temporary computer-readable storage medium that stores programs or instructions. The CPU 104, which functions as a processor, performs various functions and processes of the node 100 according to various data such as the program stored in the memory device 103 and the parameters necessary to execute the program. The interface device 105 is used as a communication interface for connecting to a network or an external device. The communication device 106 performs various communication processing for communicating with the external device.

However, the node 100 is not limited to the hardware configurations described above, and may be implemented in any other suitable hardware configuration, such as one or more circuitry that implements one or more of the functions and processing by the node 100.

### <Escrow Transaction>

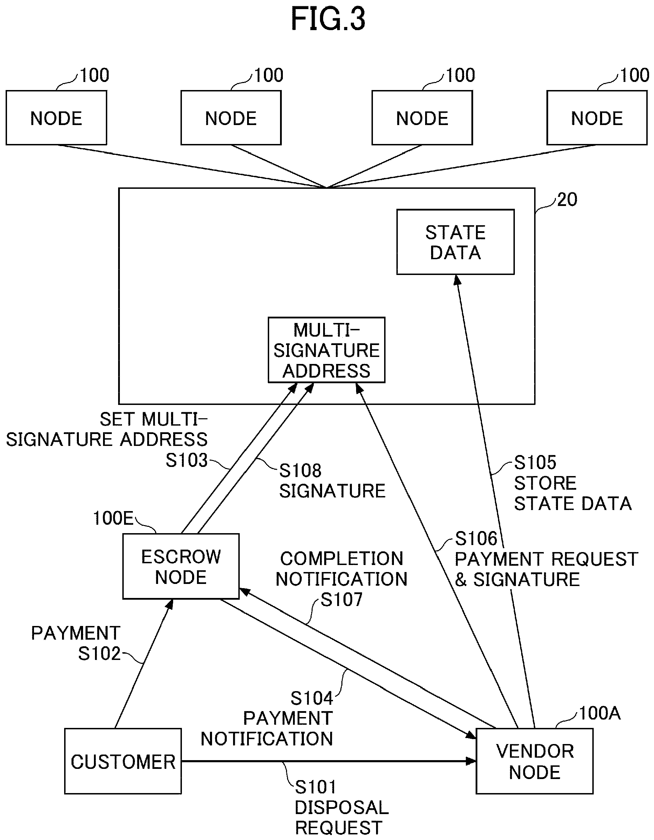

With reference to FIG. 3, an escrow transaction in the escrow system 10 according to an embodiment of the present disclosure will be described. FIG. 3 is a schematic diagram illustrating an escrow transaction according to an embodiment of the present disclosure. In the embodiment illustrated in FIG. 3, a vendor node 100A, which receives a disposal request for an appliance from a customer, disposes of the appliance requested by a blockchain based escrow transaction in conjunction with an escrow node 100E.

As illustrated in FIG. 3, in step S101, the customer requests a vendor to dispose of the appliance to be recycled. For example, the customer may use his/her personal computer, smartphone, or the like to access the vendor node 100A, such as a manufacturer of the appliance, distributor, or recycler and request the disposal of the appliance.

In step S102, the customer notifies the escrow node 100E that the vendor has been requested the disposal of the appliance and notifies the escrow node 100E of identification information, such as the address of the vendor node 100A. Alternatively, the vendor node 100A that has received the disposal request may redirect the communication with the customer to the escrow node 100E and guide the customer to the escrow node 100E. Subsequently, the customer pays a disposal cost to the escrow node 100E. For example, the customer may use a credit card or the like to pay the disposal cost to the escrow node 100E or may settle the disposal cost using a virtual currency or the like.

In step S103, the escrow node 100E sets a multi-signature address (for example, a 2-of-2 multi-signature address) according to the escrow node 100E and the vendor node 100A. For example, the address of the vendor node 100A and the escrow node 100E, identification information of the appliance to be disposed of, the disposal cost, and the like may be set in the multi-signature address.

In step S104, the escrow node 100E notifies the vendor node 100A that the disposal cost has been paid by the customer.

In optional step S105, the vendor node 100A stores the state data indicating an operation state or the like of the accepted appliance in the blockchain. For example, the vendor node A can generate a transaction including the collected state data, and when the transaction is verified and approved, the state data can be stored in a distributed manner by adding a block including the transaction to the blockchain. However, the state data may be stored by the vendor node 100A instead of being stored in the blockchain or in addition to being stored in the blockchain.

For example, the appliance may be, without limitation, at least one of an air conditioner, a ventilation unit, an air purifier, a total heat exchanger, a refrigerator, a freezer, or the like. The state data may include, without limitation, one or more of a model number, a manufactured year, a total operating time, a maximum load, a failure history, and a repair history of the appliance.

In step S106, upon completion of the disposal of the requested appliance, the vendor node 100A transmits a disposal cost receipt request and its own signature to the multi-signature address.

In step S107, the vendor node 100A notifies the escrow node 100E of the completion of the disposal.

In step S108, the escrow node 100E transmits its own signature to the multi-signature address whereby the disposal cost is paid to the vendor node 100A.

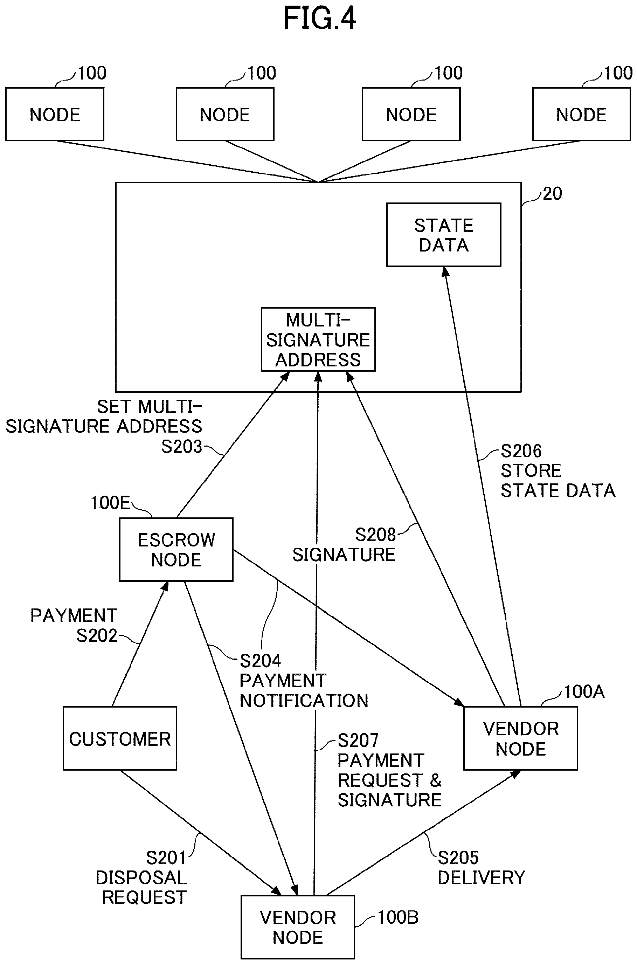

Next, with reference to FIG. 4, an escrow transaction in the escrow system 10 according to another embodiment of the present disclosure will be described. FIG. 4 is a schematic diagram illustrating an escrow transaction according to another embodiment of the present disclosure. In the embodiment illustrated in FIG. 4, a customer requests a disposal vendor 100A to dispose of an appliance via a broker node 100B. The vendor node 100A disposes of the appliance by a blockchain based escrow transaction in conjunction with the broker node 100B and the escrow node 100E.

As illustrated in FIG. 4, in step S201, the customer requests the disposal of the appliance to be recycled by a disposal company, such as a manufacturer of the appliance, via a broker. For example, the customer may use his/her personal computer, smartphone, or the like to access the broker node 100B, such as a manufacturer of the appliance, distributor, or recycler and request the disposal of the appliance, and request the disposal of the appliance to be recycled by the disposal vendor node 100A such as a manufacturer of the appliance.

In step S202, the customer notifies the escrow node 100E that the broker has been requested the disposal of the appliance and notifies the escrow node 100E of identification information, such as the address of the disposal vendor node 100A and the broker node 100B. Alternatively, the broker node 100B that has received the disposal request may redirect the communication with the customer to the escrow node 100E and guide the customer to the escrow node 100E. Subsequently, the customer pays the disposal cost to the escrow node 100E. For example, the customer may use a credit card or the like to pay the disposal cost to the escrow node 100E or may settle the disposal cost using a virtual currency or the like.

In step S203, the escrow node 100E sets a multi-signature address (for example, a 2-of-3 multi-signature address) according to the escrow node 100E, the vendor node 100A, and the broker node 100B. For example, the address of the disposal vendor node 100A, the broker node 100B, and the escrow node 100E, identification information of the appliance to be disposed of, the disposal cost, and the like may be set in the multi-signature address.

In step S204, the escrow node 100E notifies the disposal vendor node 100A and the broker node 100B that the disposal cost has been paid by the customer.

In step S205, the broker node 100B delivers the appliance to the disposal vendor node 100A. The disposal cost is paid to the disposal vendor node 100A from the broker node 100B at any time.

In optional step S206, the disposal vendor node 100A stores the state data indicating an operation state or the like of the accepted appliance in the blockchain. For example, the disposal vendor node 100A can generate a transaction including the collected state data, and when the transaction is verified and approved, the state data can be stored in a distributed manner by adding a block including the transaction to the blockchain. However, the state data may be stored by the disposal vendor node 100A instead of being stored in the blockchain or in addition to being stored in the blockchain.

In step S207, upon completion of delivery of the appliance, the broker node 100B transmits a disposal cost receipt request and its own signature to the multi-signature address.

In step S208, the disposal vendor node 100A transmits its own signature to the multi-signature address whereby the disposal cost is paid to the broker node 100B.

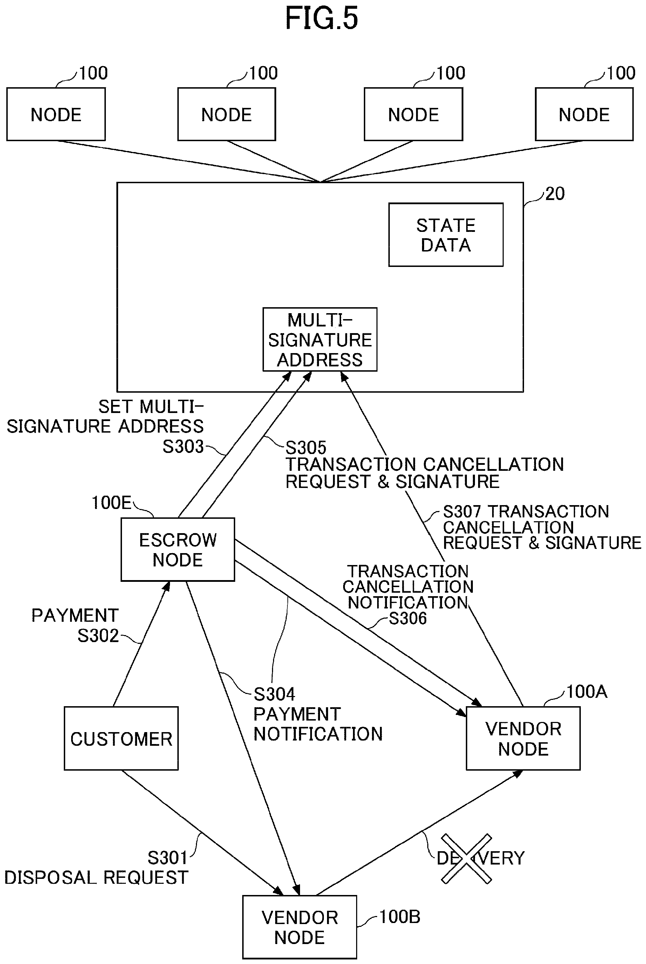

Next, with reference to FIG. 5, an escrow transaction in the escrow system 10 according to another embodiment of the present disclosure will be described. FIG. 5 is a schematic diagram illustrating an escrow transaction according to another embodiment of the present disclosure. In the embodiment illustrated in FIG. 5, a case where a disposal vendor node 100A is requested to dispose of an appliance by a customer via a broker node 100B but the broker node 100B does not deliver the appliance to the disposal vendor node 100A will be described.

As illustrated in FIG. 5, in step S301, the customer requests the disposal of the appliance to be recycled by a disposal company, such as a manufacturer of the appliance, via a broker. For example, the customer may use his/her personal computer, smartphone, or the like to access the broker node 100B, such as a manufacturer of the appliance, distributor, or recycler and request the disposal of the appliance, and request the disposal of the appliance to be recycled by a disposal vendor node 100A such as a manufacturer of the appliance.

In step S302, the customer notifies the escrow node 100E that the broker has been requested the disposal of the appliance and notifies the escrow node 100E of identification information, such as the address of the disposal vendor node 100A and the broker node 100B. Alternatively, the broker node 100B that has received the disposal request may redirect the communication with the customer to the escrow node 100E and guide the customer to the escrow node 100E. Subsequently, the customer pays the disposal cost to the escrow node 100E. For example, the customer may use a credit card or the like to pay the disposal cost to the escrow node 100E or may settle the disposal cost using a virtual currency or the like.

In step S303, the escrow node 100E sets a multi-signature address (for example, a 2-of-3 multi-signature address) according to the escrow node 100E, the vendor node 100A, and the broker node 100B. For example, the address of the disposal vendor node 100A, the broker node 100B, and the escrow node 100E, identification information of the appliance to be disposed of, the disposal cost, and the like may be set in the multi-signature address.

In step S304, the escrow node 100E notifies the disposal vendor node 100A and the broker node 100B that the disposal cost has been paid by the customer.

Meanwhile, if the broker node 100B does not deliver the appliance to the disposal vendor node 100A by a predetermined deadline, in step S305, the escrow node 100E transmits a transaction cancellation request to the multi-signature address with its own signature. For example, the deadline may be set by the escrow node 100E based on a disposal contract with the customer or the like.

Further, in step S306, the escrow node 100E notifies the disposal vendor node 100A that the transaction has been canceled.

In step S307, the disposal vendor node 100A transmits the transaction cancellation request with its own signature to the multi-signature address, thereby canceling the transaction. As a result, the deposited disposal cost is refunded to the customer without being paid to the broker node 100B.

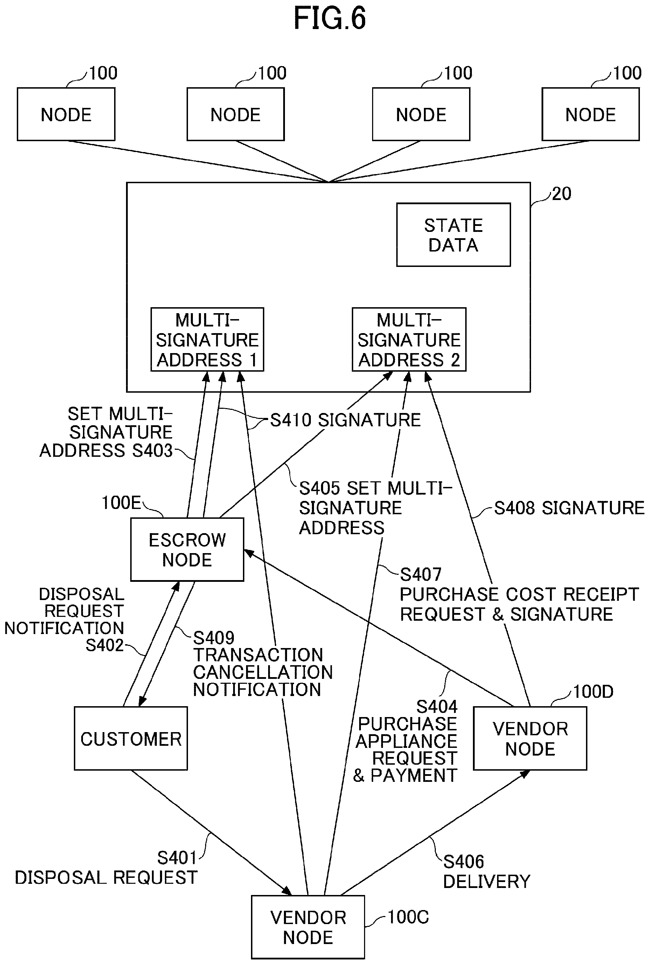

Next, with reference to FIG. 6, an escrow transaction in the escrow system 10 according to another embodiment of the present disclosure will be described. FIG. 6 is a schematic diagram illustrating an escrow transaction according to another embodiment of the present disclosure. In the embodiment illustrated in FIG. 6, a case where a customer requests a broker node 100C to dispose of an appliance (including not only recycling of the appliance but also a resale of the appliance to a third party, etc.), and the appliance is delivered to a purchase vendor node 100D according to a purchase request from the purchase vendor node 100D, is described.

As illustrated in FIG. 6, in step S401, the customer requests the disposal of the appliance to a broker. For example, the customer may use his/her personal computer, smartphone, or the like to access the broker node 100C, such as a manufacturer of the appliance, distributor, or recycler and requests the disposal of the appliance. Here, the disposal includes not only recycling of an appliance but also resale to a third party.

In step S402, the customer notifies the escrow node 100E that the broker node 100C has been requested the disposal of the appliance and notifies the escrow node 100E of identification information, such as the address of the broker node 100C. Alternatively, the broker node 100C that has received the disposal request may redirect the communication with the customer to the escrow node 100E and guide the customer to the escrow node 100E. At this time, the customer may pay the disposal cost to the escrow node 100E. For example, the customer may use a credit card or the like to pay the disposal cost to the escrow node 100E or may settle the disposal cost using a virtual currency or the like.

In step S403, the escrow node 100E sets a multi-signature address 1 (for example, a 2-of-2 multi-signature address) according to the escrow node 100E and the broker node 100C. For example, the address of the broker node 100C and the escrow node 100E, identification information of the appliance to be disposed of, disposal cost, and the like may be set in the multi-signature address 1.

In step S404, the purchase vendor node 100D transmits a purchase request for the appliance to the escrow node 100E. For example, the purchase vendor node 100D may be requested to purchase the appliance by a purchaser who has accessed second-hand appliance information provided by an application server operated by the escrow node 100E. Then a purchase request for the appliance may be transmitted to the escrow node 100E in accordance with the request. Further, the purchase vendor node 100D pays a purchase cost to the escrow node 100E.

In step S405, the escrow node 100E sets a multi-signature address 2 (for example, a 2-of-3 multi-signature address) according to the escrow node 100E, the broker node 100C, and the purchase vendor node 100D. For example, the address of the broker node 100C, the purchase vendor node 100D, and the escrow node 100E, the identification information of the appliance to be disposed of, the purchase cost, and the like may be set in the multi-signature address 2.

In step S406, the broker node 100C delivers the appliance to the purchase vendor node 100D.

In step S407, upon completion of the delivery of the appliance, the broker node 100C transmits a purchase cost receipt request and its own signature to the multi-signature address 2.

In step S408, the purchase vendor node 100D transmits its own signature to the multi-signature address 2 whereby the purchase cost is paid to the broker node 100C.

In step S409, the escrow node 100E notifies the customer that the transaction has been canceled due to the purchase of the appliance, with respect to the disposal request from the customer in step S401 to the broker node 100C.

In step S410, the escrow node 100E and the broker node 100C transmit a signature to the multi-signature address 1, cancel the transaction, and refund the disposal cost paid by the customer to the customer. Further, the escrow node 100E pays a part or all of the purchase cost to the customer according to an agreement or contract between the customer and the broker node 100C, or another agreement.

In the present embodiment, the customer initially requests the broker node 100C to dispose of the appliance, but is not limited thereto, and it will be clear that the present disclosure can be readily applied even when the customer originally intended to sell the appliance as a second-hand item. In this case, an escrow transaction using the multi-signature address 2 according to the broker node 100C, the purchase vendor node 100D, and the escrow node 100E, which are requested by the customer, may be executed.

### <Application Server>

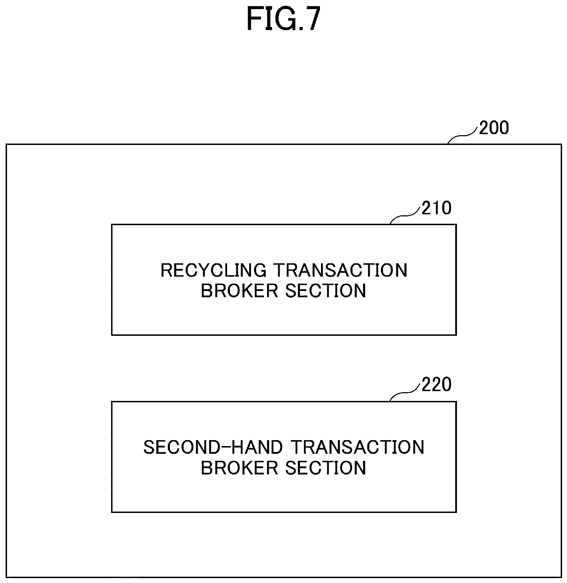

Next, an application server according to one embodiment of the present disclosure will be described with reference to FIG. 7. In the present embodiment, the application server is operated as a function of the escrow node 100E. However, the present disclosure is not limited to this, and for example, the application server may be operated by any other node 100, an external server of the escrow system 10, or the like. FIG. 7 is a block diagram illustrating a functional configuration of the application server according to an embodiment of the present disclosure.

As illustrated in FIG. 7, an application server 200 includes a recycling transaction broker section 210 and a second-hand transaction broker section 220.

The recycling transaction broker section provides recycling vendor information to the user and receives a transaction request with respect to a recycling vendor selected by the user based on the recycling vendor information. For example, the recycling transaction broker section 210 stores a list of nodes 100 (for example, disposal vendors, brokers, or the like) providing recycling services in the escrow system 10 as recycling vendor information and provides the recycling vendor information to the node 100, other users, and the like. When a user who desires to recycle the appliance selects a vendor from the recycling vendor information, the recycling transaction broker section 210 executes the escrow transaction described above in conjunction with the vendor node 100 of the selected vendor.

The second-hand transaction broker section 220 provides the user with the second-hand appliance information and receives the transaction request for the second-hand appliance selected by the user based on second-hand appliance information.

Here, the second-hand appliance information may include at least one of a price of the second-hand appliance, state data, and installation environment information. The second-hand appliance information may be distributed and stored as a blockchain or stored in the escrow node 100E.

For example, the price of the second-hand appliance may be determined from the state data of the second-hand appliance. Further, the price determination may be automatically determined from the state data by a predetermined calculation formula, AI, or the like. Alternatively, the price may be determined by any node 100, a customer who owns the appliance, or the like. Alternatively, the price may be determined by a first-come-first-served basis, an auction method, or the like.

The state data may be any data indicative of an operating state of the appliance, for example, a manufactured year, a total operating time, a maximum load, a failure history, and a repair history.

The installation environment information may include an installation location of the appliance (for example, information that can identify the climate of the cities, towns, villages, or the like), a purpose (for example, use in a commercial facility, factory, hotel, or the like), surrounding environment (for example, salt damage, dust, wind and rain, snow accidental, or the like, in the case of outdoor appliance, oil, humidity, water drops, dust, or the like, in the case of indoor appliance), a purpose of the installation location (for example, a rooftop, a balcony, or the like, in the case of outdoor appliance, an office, a guest room, a smoking area, a kitchen, or the like, in the case of indoor appliance), and the like.

For example, the second-hand transaction broker section 220 collects the second-hand appliance information from the node 100 or the like and provides screen information representing the second-hand appliance information to the user. For example, the screen information may display the second-hand appliance information together with images of each appliance, specifications (for example, a horsepower, a color, a weight, size, refrigerant, or the like), an accessory option (for example, a remote control, an internet connection adapter, a decorative panel, or the like), a product review (for example, quantified ratings), a vendor evaluation (for example, quantified evaluations), a similar product, a competing product, a recommended product, and the like. When the user detects a desired appliance from the information on the second-hand appliance and indicates a purchase request, the second-hand transaction broker section 220 executes the above-described escrow transaction in conjunction with the broker node 100C of the selected appliance and the purchase vendor node 100D that notified the purchase request.

Although a description has been given of the embodiments, it may be understood that various modifications may be made to the configurations and details thereof, without departing from the subject matter and scope of the claims.

This application is based on and claims priority to Japanese Patent Application No. 2019-213351, filed on November 26, 2019.

### [Description of Symbols]

- 10: escrow system
- 20: blockchain network
- 100: node
- 200: application server
- 210: recycling transaction broker section
- 220: second-hand transaction broker section

## Claims

1. A system comprising an escrow node, a first node and an escrow system comprising:
a group of nodes; and
a blockchain network that connects each node of the group of nodes,
wherein the escrow node sets, with respect to a transaction relating to a product or a service between a user and the first node, a first multi-signature address between the first node and the escrow node, in the blockchain network,
the first node, in response to a completion notification of payment of a cost relating to the transaction by the user to the escrow node, executes the transaction and transmits a signature and a fulfillment notification of the transaction to the first multi-signature address,
the escrow node, in response to an execution of the transaction by the first node, transmits a signature and a fulfillment notification of the transaction to the first multi-signature address, and
the first node, in response to the signature and the fulfillment notification of the transaction from the first node and the escrow node to the first multi-signature address, receives a payment notification of the cost.

2. The system according to claim 1,
wherein, when the escrow node sets, with respect to a transaction relating to a product or a service between the user and the first node via a second node of the system, a second multi-signature address between the second node and the escrow node in the blockchain network,
the second node, in response to a completion notification of payment of a cost relating to the transaction by the user to the escrow node, executes the transaction with respect to the first node and transmits a signature and a fulfillment notification of the transaction to the second multi-signature address,
the first node, in response to an execution of the transaction by the second node, transmits a signature and a fulfillment notification of the transaction to the second multi-signature address, and
the second node, in response to the signature and the fulfillment notification of the transaction from the first node and the second node to the second multi-signature address, receives a payment notification of the cost.

3. The system according to claim 2, wherein, the second multi-signature address is a 2-of-3 multi-signature address.

4. The system according to claim 2 or 3, wherein, when the second node does not execute the transaction with respect to the first node within a predetermined period of time, the escrow node transmits a signature and a cancellation notification of the transaction to the second multi-signature address, and the first node transmits a signature and a cancellation notification of the transaction to the second multi-signature address, and
the escrow node, in response to the signature and the cancellation notification of the transaction from the escrow node and the first node to the second multi-signature address, notifies the user of a refund of the cost.

5. The system according to any one of claims 1 to 4, wherein the transaction relates to a recycling of an appliance, and
the first node stores state data of the appliance in a blockchain.

6. The system according to claim 5, wherein the appliance is at least one of an air conditioner, a ventilation unit, an air purifier, a total heat exchanger, a refrigerator, and a freezer, and
the state data includes one or more of a model number, a manufactured year, a total operating time, a maximum load, a failure history, and a repair history of the appliance.

7. The system according to any one of claims 1 to 6, wherein the escrow system further comprises an application server, and, wherein the application server includes:
a recycling transaction broker section configured to provide recycling vendor information to the user and receive a transaction request with respect to a recycling vendor selected by the user based on the recycling vendor information; and
a second-hand transaction broker section configured to provide second-hand appliance information to the user and receive a transaction request with respect to a second-hand appliance selected by the user based on the second-hand appliance information.

8. The system according to claim 7, wherein the second-hand appliance information includes at least one of a price, state data, and installation environment information of the second-hand appliance.

9. A transaction method implemented by a system comprising an escrow node, a first node and an escrow system including a group of nodes and a blockchain network that connects each node of the group of nodes, the transaction method comprising:
setting, by the escrow node, with respect to a transaction relating to a product or a service between a user and the first node, a first multi-signature address between the first node and the escrow node in the blockchain network;
executing, by the first node, in response to a completion notification of payment of a cost relating to the transaction by the user to the escrow node, the transaction; transmitting, by the first node, a signature and a fulfillment notification of the transaction to the multi-signature address;
transmitting, by the escrow node, in response to an execution of the transaction by the first node, a signature and a fulfillment notification of the transaction to the first multi-signature address; and
receiving, by the first node, in response to the signature and the fulfillment notification of the transaction from the first node and the escrow node to the first multi-signature address, a payment notification of the cost.

## Patentansprüche

1. System, umfassend einen Treuhandknoten, einen ersten Knoten und ein Treuhandsystem, umfassend:
eine Gruppe von Knoten; und
ein Blockchainnetzwerk, das jeden Knoten der Gruppe von Knoten verbindet,
wobei der Treuhandknoten, in Bezug auf eine Transaktion bezüglich eines Produkts oder eines Dienstes zwischen einem Benutzer und dem ersten Knoten, eine erste Mehrsignaturenadresse zwischen dem ersten Knoten und dem Treuhandknoten in das Blockchainnetzwerk setzt,
der erste Knoten, als Reaktion auf eine Abschlussbenachrichtigung über die Zahlung von Kosten bezüglich der Transaktion durch den Benutzer an den Treuhandknoten, die Transaktion ausführt und eine Signatur und eine Erfüllungsbenachrichtigung über die Transaktion an die erste Mehrsignaturenadresse überträgt,
der Treuhandknoten, als Reaktion auf eine Ausführung der Transaktion durch den ersten Knoten, eine Signatur und eine Erfüllungsbenachrichtigung über die Transaktion an die erste Mehrsignaturenadresse überträgt und
der erste Knoten, als Reaktion auf die Signatur und die Erfüllungsbenachrichtigung über die Transaktion von dem ersten Knoten und dem Treuhandknoten an die erste Mehrsignaturenadresse, eine Zahlungsbenachrichtigung über die Kosten empfängt.

2. System nach Anspruch 1,
wobei, wenn der Treuhandknoten in Bezug auf eine Transaktion bezüglich eines Produkts oder eines Dienstes zwischen dem Benutzer und dem ersten Knoten über einen zweiten Knoten des Systems eine zweite Mehrsignaturenadresse zwischen dem zweiten Knoten und dem Treuhandknoten in das Blockchainnetzwerk setzt,
der zweite Knoten, als Reaktion auf eine Abschlussbenachrichtigung über die Zahlung von Kosten bezüglich der Transaktion durch den Benutzer an den Treuhandknoten, die Transaktion in Bezug auf den ersten Knoten ausführt und eine Signatur und eine Erfüllungsbenachrichtigung über die Transaktion an die zweite Mehrsignaturenadresse überträgt,
der erste Knoten, als Reaktion auf eine Ausführung der Transaktion durch den zweiten Knoten, eine Signatur und eine Erfüllungsbenachrichtigung über die Transaktion an die zweite Mehrsignaturenadresse überträgt und
der zweite Knoten, als Reaktion auf die Signatur und die Erfüllungsbenachrichtigung über die Transaktion von dem ersten Knoten und dem zweiten Knoten an die zweite Mehrsignaturenadresse, eine Zahlungsbenachrichtigung über die Kosten empfängt.

3. System nach Anspruch 2, wobei die zweite Mehrsignaturenadresse eine 2-von-3-Mehrsignaturenadresse ist.

4. System nach Anspruch 2 oder 3, wobei, wenn der zweite Knoten die Transaktion in Bezug auf den ersten Knoten innerhalb einer im Voraus bestimmten Zeitperiode nicht ausführt, der Treuhandknoten eine Signatur und eine Stornierungsbenachrichtigung der Transaktion an die zweite Mehrsignaturenadresse überträgt und der erste Knoten eine Signatur und eine Stornierungsbenachrichtigung der Transaktion an die zweite Mehrsignaturenadresse überträgt und
der Treuhandknoten, als Reaktion auf die Signatur und die Stornierungsbenachrichtigung der Transaktion von dem Treuhandknoten und dem ersten Knoten an die zweite Mehrsignaturenadresse, den Benutzer über eine Rückerstattung der Kosten benachrichtigt.

5. System nach einem der Ansprüche 1 bis 4, wobei die Transaktion ein Recycling eines Geräts betrifft und
der erste Knoten Zustandsdaten des Geräts in einer Blockchain speichert.

6. System nach Anspruch 5, wobei das Gerät mindestens eines eines Klimageräts, eines Lüftungsgeräts, eines Luftreinigers, eines Gesamtwärmetauschers, eines Kühlschranks und eines Gefrierschranks ist und
die Zustandsdaten eines oder mehrere einer Modellnummer, eines Herstellungsjahrs, einer Gesamtbetriebszeit, einer maximalen Belastung, einer Fehlerhistorie und einer Reparaturhistorie des Geräts enthalten.

7. System nach einem der Ansprüche 1 bis 6, wobei das Treuhandsystem ferner einen Anwendungsserver umfasst und wobei der Anwendungsserver enthält:
einen Recycling-Transaktionsvermittlungsabschnitt, konfiguriert zum Bereitstellen von Recyclinganbieter-Informationen für den Benutzer und Empfangen einer Transaktionsanforderung in Bezug auf einen durch den Benutzer basierend auf den Recyclinganbieter-Informationen ausgewählten Recyclinganbieter; und
eine Gebraucht-Transaktionsvermittlungsabschnitt, konfiguriert zum Bereitstellen von Gebrauchtgerät-Informationen für den Benutzer und Empfangen einer Transaktionsanforderung in Bezug auf ein durch den Benutzer basierend auf den Gebrauchtgerät-Informationen ausgewähltes Gebrauchtgerät.

8. System nach Anspruch 7, wobei die Gebrauchtgerät-Informationen mindestens eines eines Preises, von Zustandsdaten und von Installationsumgebung-Informationen des Gebrauchtgeräts enthalten.

9. Transaktionsverfahren, implementiert durch ein System, umfassend einen Treuhandknoten, einen ersten Knoten und ein Treuhandsystem, enthaltend eine Gruppe von Knoten und ein Blockchainnetzwerk, das jeden Knoten der Gruppe von Knoten verbindet, das Transaktionsverfahren umfassend:
Setzen, durch den Treuhandknoten, in Bezug auf eine Transaktion bezüglich eines Produkts oder eines Dienstes zwischen einem Benutzer und dem ersten Knoten, einer ersten Mehrsignaturenadresse zwischen dem ersten Knoten und dem Treuhandknoten in das Blockchainnetzwerk;
Ausführen, durch den ersten Knoten, als Reaktion auf eine Abschlussbenachrichtigung über die Zahlung von Kosten bezüglich der Transaktion durch den Benutzer an den Treuhandknoten, der Transaktion; Übertragen, durch den ersten Knoten, einer Signatur und einer Erfüllungsbenachrichtigung über die Transaktion an die Mehrsignaturenadresse;
Übertragen, durch den Treuhandknoten, als Reaktion auf eine Ausführung der Transaktion durch den ersten Knoten, einer Signatur und einer Erfüllungsbenachrichtigung über die Transaktion an die erste Mehrsignaturenadresse; und
Empfangen, durch den ersten Knoten, als Reaktion auf die Signatur und die Erfüllungsbenachrichtigung über die Transaktion von dem ersten Knoten und dem Treuhandknoten an die erste Mehrsignaturenadresse, einer Zahlungsbenachrichtigung über die Kosten.

## Revendications

1. Système comprenant un noeud d'entiercement, un premier noeud et un système d'entiercement comprenant :
un groupe de noeuds ; et
un réseau de blockchain qui connecte chaque noeud du groupe de noeuds,
le noeud d'entiercement définissant, par rapport à une transaction relative à un produit ou un service entre un utilisateur et le premier noeud, une première adresse multi-signature entre le premier noeud et le noeud d'entiercement dans le réseau de blockchain,
le premier noeud, en réponse à une notification d'acquittement de paiement d'un coût relatif à la transaction par l'utilisateur au noeud d'entiercement, exécutant la transaction et transmettant une signature et une notification de bonne exécution de la transaction à la première adresse multi-signature,
le noeud d'entiercement, en réponse à une exécution de la transaction par le premier noeud, transmettant une signature et une notification de bonne exécution de la transaction à la première adresse multi-signature, et
le premier noeud, en réponse à la signature et à la notification de bonne exécution de la transaction du premier noeud et du noeud d'entiercement à la première adresse multi-signature, recevant une notification de paiement du coût.

2. Système selon la revendication 1,
lorsque le noeud d'entiercement définit, par rapport à une transaction relative à un produit ou un service entre l'utilisateur et le premier noeud par le biais d'un deuxième noeud du système, une deuxième adresse multi-signature entre le deuxième noeud et le noeud d'entiercement dans le réseau de blockchain,
le deuxième noeud, en réponse à une notification d'acquittement de paiement d'un coût relatif à la transaction par l'utilisateur au noeud d'entiercement, exécutant la transaction par rapport au premier noeud et transmettant une signature et une notification de bonne exécution de la transaction à la deuxième adresse multi-signature,
le premier noeud, en réponse à une exécution de la transaction par le deuxième noeud, transmettant une signature et une notification de bonne exécution de la transaction à la deuxième adresse multi-signature, et
le deuxième noeud, en réponse à la signature et à la notification de bonne exécution de la transaction du premier noeud et du deuxième noeud à la deuxième adresse multi-signature, recevant une notification de paiement du coût.

3. Système selon la revendication 2, la deuxième adresse multi-signature étant une adresse multi-signature 2 sur 3.

4. Système selon la revendication 2 ou 3, lorsque le deuxième noeud n'exécute pas la transaction par rapport au premier noeud dans un laps de temps prédéterminé, le noeud d'entiercement transmettant une signature et une notification d'annulation de la transaction à la deuxième adresse multi-signature, et le premier noeud transmettant une signature et une notification d'annulation de la transaction à la deuxième adresse multi-signature, et
le noeud d'entiercement, en réponse à la signature et à la notification d'annulation de la transaction du noeud d'entiercement et du premier noeud à la deuxième adresse multi-signature, notifiant à l'utilisateur un remboursement du coût.

5. Système selon l'une quelconque des revendications 1 à 4, la transaction étant relative à un recyclage d'un appareil, et
le premier noeud stockant des données d'état de l'appareil dans une blockchain.

6. Système selon la revendication 5, l'appareil étant un climatiseur et/ou une unité de ventilation et/ou un purificateur d'air et/ou un échangeur de chaleur total et/ou un réfrigérateur et/ou un congélateur, et
les données d'état comportant un numéro de modèle et/ou une année de fabrication et/ou une durée totale de fonctionnement et/ou une charge maximale et/ou un historique des pannes et/ou un historique des réparations de l'appareil.

7. Système selon l'une quelconque des revendications 1 à 6, le système d'entiercement comprenant en outre un serveur d'applications, et le serveur d'applications comportant :
une unité de courtage de transactions de recyclage configurée pour fournir des informations de prestataires de recyclage à l'utilisateur et recevoir une demande de transaction par rapport à un prestataire de recyclage sélectionné par l'utilisateur sur la base des informations de prestataires de recyclage ; et
une unité de courtage de transactions d'occasion configurée pour fournir des informations d'appareils d'occasion à l'utilisateur et recevoir une demande de transaction par rapport à un appareil d'occasion sélectionné par l'utilisateur sur la base des informations d'appareils d'occasion.

8. Système selon la revendication 7, les informations d'appareils d'occasion comportant un prix et/ou des données d'état et/ou des informations d'environnement d'installation de l'appareil d'occasion.

9. Procédé de transaction mis en oeuvre par un système comprenant un noeud d'entiercement, un premier noeud et un système d'entiercement comportant un groupe de noeuds et un réseau de blockchain qui connecte chaque noeud du groupe de noeuds, le procédé de transaction comprenant :
la définition, par le noeud d'entiercement, par rapport à une transaction relative à un produit ou un service entre un utilisateur et le premier noeud, d'une première adresse multi-signature entre le premier noeud et le noeud d'entiercement dans le réseau de blockchain ;
l'exécution, par le premier noeud, en réponse à une notification d'acquittement de paiement d'un coût relatif à la transaction par l'utilisateur au noeud d'entiercement, de la transaction ;
la transmission, par le premier noeud, d'une signature et d'une notification de bonne exécution de la transaction à l'adresse multi-signature ;
la transmission, par le noeud d'entiercement, en réponse à une exécution de la transaction par le premier noeud, d'une signature et d'une notification de bonne exécution de la transaction à la première adresse multi-signature ; et
la réception, par le premier noeud, en réponse à la signature et à la notification de bonne exécution de la transaction du premier noeud et du noeud d'entiercement à la première adresse multi-signature, d'une notification de paiement du coût.
